# EUROPEAN PATENT APPLICATION

(11) **EP 1 860 563 A1**
(43) Date of publication of application: **28.11.2007**
(21) Application number: 07252191.7
(22) Date of filing: 29.05.2007
(51) Int. Cl.: G06F 11/14, G06F 9/445

(54) **Sparse checkpoint and rollback**

(30) Priority: 26.05.2006 US 442069
(71) Applicant: Intel Corporation, Santa Clara, CA 95052 (US)
(72) Inventor: Rothman, Michael, Puyallup WA 97229 (US); Zimmer, Vincent, Federal Way WA 98003 (US)
(74) Representative: Beresford, Keith Denis Lewis

(57) **Abstract**

An agent of a processor based system tracking changes in a nonvolatile storage at a logical block level, checkpointing the nonvolatile storage at the logical block level by saving changed data and restoring the nonvolatile storage to a checkpointed state in response to a notification.

## Description

### Background

Internet cafés and similar services are ever increasingly popular, especially in countries where the typical computer user may not be able to afford to purchase a personal computer system. In general, such services provide short term access to a computer system (or more broadly, a processor based system) to members of the public for a fee or rental charge. Typical concerns when providing and using such services are the possibility of a previous session by a previous user on a computer system having caused problems with the computer that would affect a current session and the current user. Such problems may arise from the possibility that the previous user downloaded a virus, worm, or another type of malicious program which may then corrupt or otherwise compromise the current user's session; or that the previous user caused other types of problems such as filling disk space to near-capacity, etc. Another type of problem may arise if a future user is able to access private data left on the computer system, and thus access personal information that the current user does not wish to disclose, such as financial or medical information left on a hard disk drive or other storage device of the system after its use by the current user.

One solution used at present to mitigate or eliminate these issues is to perform a complete re-install of a clean image of the operating system and applications onto the hard disk drive of each computer system between user sessions. This process is generally effective in mitigating or eliminating the problems described above, but is expensive in terms of time taken. Furthermore, if a user who used a computer previously returns to use the same or a different computer, the user's session is typically a clean session to start with and there can therefore be no continuity between user sessions.

### Brief Description of the Drawings

**Figure 1** depicts a processor based system in one embodiment.
**Figure 2** depicts the organization of a non-volatile storage in one embodiment.
**Figure 3** depicts a logical view of data in a non-volatile storage in one embodiment.
**Figure 4** is a flowchart of processing in one embodiment.

### Detailed Description

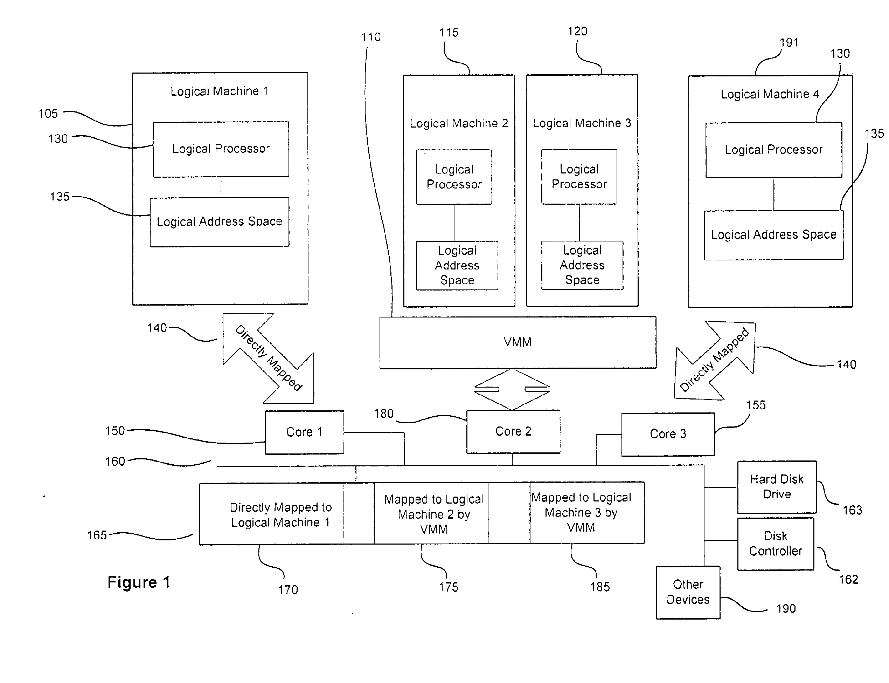

A many core system is a term used herein to refer to a system such as that depicted in Figure 1. As in the figure, a many core system may include a plurality of processor cores or processors such as cores 150, 155 and 180. The term core as used herein may refer, for example, to a single processor of a multiprocessor system, or to a processor core of a multicore processor. In general, the system has a set of busses such as the bus 160 that interconnects the cores and a memory 165 with devices on the bus such as a disk controller 162, or other devices 190. These devices may include for example, non-volatile storage devices as one or more hard disk drive 163, and input and output devices. As shown in the system depicted, the cores may form the basis of several logical machines presenting an abstraction of processor and memory, such as logical machines 1-4, at 105, 115, 120 and 191. Each logical machine provides a logical view of a processor 130 and memory 135 to programs executing on the logical machine. In some instances such as with logical machine 1 at 105, a core such as the core 150 and a segment of the system memory 170 may be directly mapped 140 to the logical machine 105 much as in a single processor system. This may be accomplished in one embodiment by modifying the ACPI tables in the BIOS to partition the memory and processors into segregated (logical) partitions. In other instances, logical machines may actually be virtual machines such as the machines 115 and 120, that may in turn execute via a virtual machine monitor (VMM) that itself executes directly on a core such as the core at 180. The VMM may then partition the memory available to its core 180 into segments 175 and 185 allocated to the virtual logical machines 115 and 120 respectively. General purpose logical machines of a many core system such as 105, 115 and 120 may also be referred to as (logical) address spaces of the system, because each logical machine defines an address space within which a logical memory and a register set of a processor may be referenced. Similarly, other devices, including I/O devices, may be provided as logical devices.

The above described system may vary in various embodiments. Some embodiments may include no virtual machines at all, and only provide sequestered or segregated partitions. Others may only have virtual machines. In some embodiments only one actual core may be present, with no partitions and no virtual machines. Many other variations are possible.

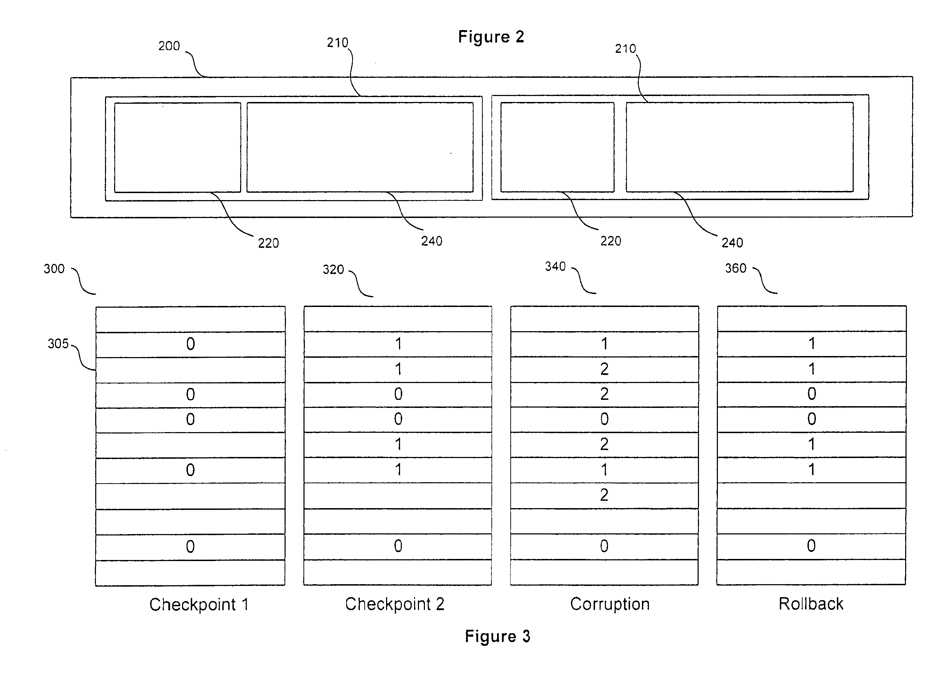

A change tracking agent may be implemented in a system like the above many core system in some embodiments. This change tracking agent may be a logical component of a disk controller 162 in some embodiments; in other embodiments where a plurality of logical machines is present, the change tracking agent may be implemented as a program executing on one of the logical machines of the system such as 105, 115, 120, or 191. Typically the tracking agent tracks changes that occur in a user partition or a logical machine intended for a user. In embodiments where the change tracking agent is implemented as a program executing in a logical machine of the system, the logical machine or partition is one that is distinct from the user partition or machine; in general, the user partition or logical machine has no access to or knowledge of the tracking agent because the agent is in a different partition. Thus, the tracking agent cannot generally be compromised or affected by actions in a user session. In embodiments where the change tracking agent is implemented as a logical component of a disk controller, the embodiment may or may not have multiple logical machines. In such embodiments with only one logical machine, where the change tracking agent is incorporated into the disk controller, the agent is independent of the operating system or other programs executing in the system above the operating system layer. The change tracking agent will be discussed further with reference to figures 2 and 3 below.

Figure 2 represents at a high level the organization of a non-volatile storage such as a hard disk in one embodiment. In the hard disk embodiment the storage may be divided into partitions 210, as is known, each of which is further divided into a partition table 220 and a data area 240. The data area may be accessed using logical block addresses (LBAs) that allow access to the underlying areas on the physical disk that contain the data. The specific details may vary in different types of non-volatile storage as is known, but generally the storage may be thought of as an array of locations in which data may be stored that are addressable using the logical block addresses.

Figure 3 depicts the storage area of a non-volatile storage such as that depicted in fig. 2 in one embodiment. In the figure, the storage area is shown in a logical form, at different stages during a user session on a processor based system such as a system discussed with reference to fig. 1. Each view such as the view at 300 depicts a snapshot of a part of the contents of the storage at a point in time. Each horizontal segment in the view 305 represents a logical location on the storage medium accessible by an LBA.

In the view at 300, the storage is populated with data created by an initial or clean install of an operating system and applications. The LBA locations that form the data modified by the install are marked with a label 0 in the figure.

At this point in time, i.e. after the installation of the image, a tracking agent as described above with reference to fig. 1 is invoked in one embodiment. The tracking agent may then checkpoint the changed data at 300 in fig. 3, storing only the locations that are changed by the install process (i.e the locations marked with 0s in fig.3 at 300). At 320, the logical view of the storage is depicted after a first user has used the system and modified data and other files, creating the changed locations shown with the label 1 in the figure. The tracking agent is able to identify the changes between the last saved or check pointed state and store only the differences to create a second checkpoint which is essentially a snapshot of the user session to this point in time. Subsequent changes that may occur within the same user session are then marked 2 in fig. 3 at 340. In this example, it is possible that the changes marked by 2s in fig. 3 are caused in part by a data corruption, possibly due to a worm, a virus or other malware; or, alternatively they may be changes that for other reasons the user desires to undo, such as an accidental overwriting of important data. When this occurs, it is then possible to roll back the changes shown at 340 to the previous state check pointed, thus restoring the system to a good state and continuing the user session at 360.

In an internet café or other environment providing multiple computing platforms for public use, the general mechanism described above can also be used to rapidly restore a computer to a known good state such as that depicted at 300, or alternatively to migrate a user session from one computer to another. For example, the checkpoint stored at 320 could be used to populate a machine other than the machine on which it was created. As long as the image thus created in the store following the population of the other machine was compatible with the other machine, a user using the other machine would be able to continue the session as checkpointed at 320 on the other machine without having to start from a clean install.

Furthermore, a checkpoint as depicted at 300 could be used in some embodiments to restore a system to a clean initial state without requiring a complete rewrite of the disk, thus allowing for a relatively rapid reinitialization of a system for a new user.

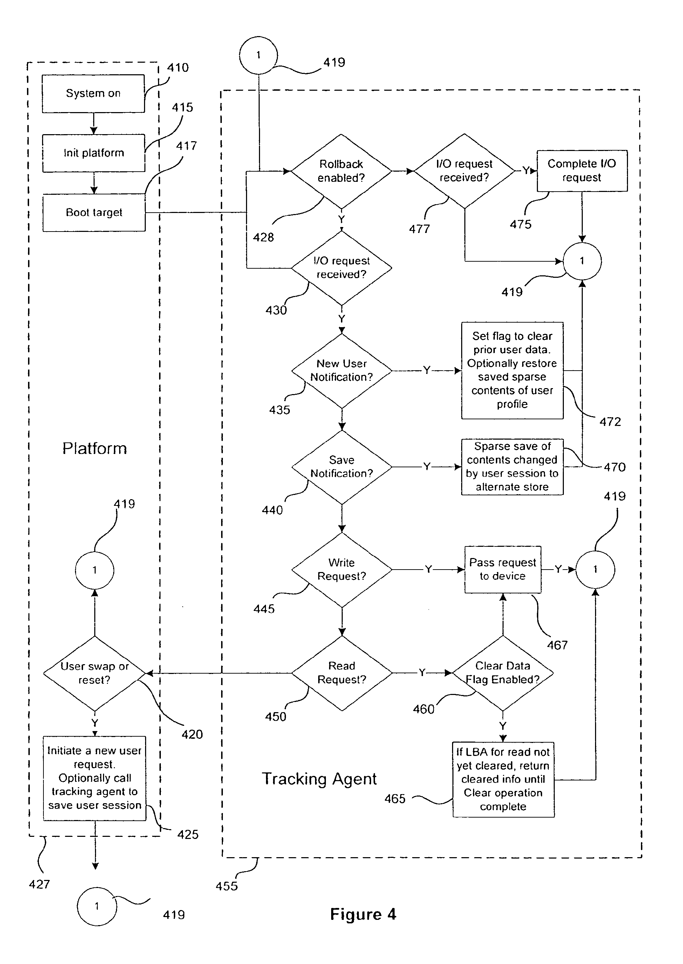

A detailed view of the operation of the platform and the change tracking system of one embodiment is depicted in the flowchart of Figure 4. In the figure, actions that occur in the user session, that is, in the logical machine or partition, in which the user programs and operating system execute, are depicted in the block marked 427. Actions that occur in the change tracking agent are shown in the block marked 455.

As discussed previously, the actions in the figure may be implemented in various ways in a system such as that discussed previously with reference to fig. 1. In general, when the system is started at 410, a platform initialization procedure executes, 415, and the user partition or logical machine is then booted at 417.

The change tracking agent of the system is now active and executes continuously, starting at 419. As may be seen from the figure, the agent operates in two modes, one in which checkpointing and rollback is enabled, and one in which it is not. If checkpointing and rollback is not enabled at 428, and an Input/Output request (I/O request) is received at 477, the change tracking agent merely passes the request on to the platform for processing. If however, checkpointing and rollback is enabled at 428, the change tracking agent operates differently. Each I/O request is now examined to determine whether it is a new user notification, 435, save notification, 440, a write request, 445, or a read request, 450. In each case, a different action may be taken. If a new user notification is received, 435, the tracking agent may set an internal flag to clear data associated with any prior users at 472. This allows the system to do a staged rollback to a checkpoint based on a clean system without blocking I/O operations prior to the user logging in. This is feasible because the rollback does not require the rewriting of large portions of hard disk or other storage, but only those portions that have changed since the last checkpoint. Alternatively, also at 472, if the new user has a stored profile that is available as a checkpointed disk image, the image could be retrieved and the system initialized to that image, allowing the user to continue his or her session from the last saved state. Once the new user notification is processed at 472, the system returns to the initial point in its execution to block or wait for the next notification at 419.

If a save notification is received, 440, the changes made to the non-volatile storage from the last checkpoint are stored to an alternate store such as a server disk, 470. This checkpoint may be retrieved subsequently to restore a system following some type of corruption; or to recreate a saved user session on the same or a different platform. After processing the save notification, the system returns to the initial point in its execution to block or wait for the next notification at 419.

If a write request is received, 445, the system merely passes the request on to the appropriate device, 467 and the system returns to the initial point in its execution to block or wait for the next notification at 419. A read request, 450 needs to be handled differently if a concurrent clear data operation is pending after a flag to clear data was set at 472. If a clear data operation is pending 460, the tracking agent returns the value that the read location would have after the data is cleared 465; otherwise, the request is passed to the device for reading, 467 and the system returns to the initial point in its execution to block or wait for the next notification at 419.

Finally, the notification may indicate that a user swap or system reset has occurred. In this case, control returns to the platform to handle the request. The platform may initiate a boot, and a new user request at 425, and optionally calls the tracking agent to save the user session as at 440. Execution continues as before at 419.

In the preceding description, for purposes of explanation, numerous specific details are set forth in order to provide a thorough understanding of the described embodiments, however, one skilled in the art will appreciate that many other embodiments may be practiced without these specific details.

Some portions of the detailed description above are presented in terms of algorithms and symbolic representations of operations on data bits within a processor-based system. These algorithmic descriptions and representations are the means used by those skilled in the art to most effectively convey the substance of their work to others in the art. The operations are those requiring physical manipulations of physical quantities. These quantities may take the form of electrical, magnetic, optical or other physical signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the description, terms such as "executing" or "processing" or "computing" or "calculating" or "determining" or the like, may refer to the action and processes of a processor-based system, or similar electronic computing device, that manipulates and transforms data represented as physical quantities within the processor-based system's storage into other data similarly represented or other such information storage, transmission or display devices.

In the description of the embodiments, reference may be made to accompanying drawings. In the drawings, like numerals describe substantially similar components throughout the several views. Other embodiments may be utilized and structural, logical, and electrical changes may be made. Moreover, it is to be understood that the various embodiments, although different, are not necessarily mutually exclusive. For example, a particular feature, structure, or characteristic described in one embodiment may be included within other embodiments.

Further, a design of an embodiment that is implemented in a processor may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, data representing a hardware model may be the data specifying the presence or absence of various features on different mask layers for masks used to produce the integrated circuit. In any representation of the design, the data may be stored in any form of a machine-readable medium. An optical or electrical wave modulated or otherwise generated to transmit such information, a memory, or a magnetic or optical storage such as a disc may be the machine readable medium. Any of these mediums may "carry" or "indicate" the design or software information. When an electrical carrier wave indicating or carrying the code or design is transmitted, to the extent that copying, buffering, or retransmission of the electrical signal is performed, a new copy is made. Thus, a communication provider or a network provider may make copies of an article (a carrier wave) that constitute or represent an embodiment.

Embodiments may be provided as a program product that may include a machine-readable medium having stored thereon data which when accessed by a machine may cause the machine to perform a process according to the claimed subject matter. The machine-readable medium may include, but is not limited to, floppy diskettes, optical disks, DVD-ROM disks, DVD-RAM disks, DVD-RW disks, DVD+RW disks, CD-R disks, CD-RW disks, CD-ROM disks, and magneto-optical disks, ROMs, RAMs, EPROMs, EEPROMs, magnet or optical cards, flash memory, or other type of media / machine-readable medium suitable for storing electronic instructions. Moreover, embodiments may also be downloaded as a program product, wherein the program may be transferred from a remote data source to a requesting device by way of data signals embodied in a carrier wave or other propagation medium via a communication link (e.g., a modem or network connection).

Many of the methods are described in their most basic form but steps can be added to or deleted from any of the methods and information can be added or subtracted from any of the described messages without departing from the basic scope of the claimed subject matter. It will be apparent to those skilled in the art that many further modifications and adaptations can be made. The particular embodiments are not provided to limit the claimed subject matter but to illustrate it. The scope of the claimed subject matter is not to be determined by the specific examples provided above but only by the claims below.

## Claims

1. A method comprising:
an agent of a processor based system tracking changes in a nonvolatile storage at a logical block level;
checkpointing the nonvolatile storage at the logical block level by saving changed data; and
restoring the nonvolatile storage to a checkpointed state in response to a notification.

2. The method of claim 1 wherein the agent further comprises logic implemented in a control device for non-volatile storage of the processor based system.

3. The method of claim 1 wherein the processor based system further comprises a plurality of partitions, each partition comprising a logical core and a portion of system memory exclusively reserved to the partition; the agent comprises a program executing in a first partition of the processor based system, and a user session comprises programs executing in a second partition of the system distinct from the first partition.

4. The method of claim 1 wherein the processor based system further comprises a plurality of virtual machines, the agent further comprises a program executing in a first virtual machine of the processor based system; and wherein a user session comprises programs executing in a second virtual machine of the system, distinct from the first virtual machine.

5. The method of claim 1 wherein:
the notification comprises a notification that a new user has accessed the system;
the restoring the nonvolatile storage to a previous state comprises restoring any changed data associated with previous users to the original state of the data in the nonvolatile storage;
the method further comprising:
if a profile of the new user is available, populating the nonvolatile storage using the profile of the new user.

6. The method of claim 1 wherein:
the notification comprises at least one of:
a notification that the system has swapped users; and
a notification that the system has been reset;
the restoring the nonvolatile storage to a previous state comprises restoring any changed data associated with previous users to its original state in the nonvolatile storage;
the method further comprising:
saving the changed data in the nonvolatile storage associated with a prior user's session to a profile for the prior user to an alternate nonvolatile storage.

7. The method of claim 1 wherein the notification comprises a save notification, the method further comprising saving changed data in the nonvolatile storage to an alternate nonvolatile storage.

8. The method of claim 1 wherein the notification comprises a read request, the method further comprising:
if an indicator of a pending clear data request is detected,
returning the expected value of the cleared data in response to the request; otherwise,
passing the request to the nonvolatile storage.

9. A processor based system comprising:
an agent to
track changes in a nonvolatile storage at a logical block level;
checkpoint the nonvolatile storage at the logical block level by saving changed data; and
restore the nonvolatile storage to a checkpointed state in response to a notification.

10. The system of claim 9 wherein the agent further comprises logic implemented in a control device for non-volatile storage of the processor based system.

11. The system of claim 9 further comprising a plurality of partitions, wherein each partition comprising a logical core and a portion of system memory exclusively reserved to the partition; the agent comprises a program executing in a first partition of the processor based system, and a user session comprises programs executing in a second partition of the system distinct from the first partition.

12. The system of claim 9 further comprising a plurality of virtual machines, the agent further comprises a program executing in a first virtual machine of the processor based system; and wherein a user session comprises programs executing in a second virtual machine of the system, distinct from the first virtual machine.

13. A machine readable medium having stored thereon data that when accessed by a machine causes the machine to perform a method, the method comprising:
an agent of a processor based system tracking changes in a nonvolatile storage at a logical block level;
checkpointing the nonvolatile storage at the logical block level by saving changed data; and
restoring the nonvolatile storage to a checkpointed state in response to a notification.

14. The machine readable medium of claim 13 wherein the processor based system further comprises a plurality of partitions, each partition comprising a logical core and a portion of system memory exclusively reserved to the partition; the agent comprises a program executing in a first partition of the processor based system, and a user session comprises programs executing in a second partition of the system distinct from the first partition.

15. The machine readable medium of claim 13 wherein the processor based system further comprises a plurality of virtual machines, the agent further comprises a program executing in a first virtual machine of the processor based system; and wherein a user session comprises programs executing in a second virtual machine of the system, distinct from the first virtual machine.
